# EUROPEAN PATENT APPLICATION

(11) **EP 3 730 293 A1**
(43) Date of publication of application: **28.10.2020**
(21) Application number: 20168743.1
(22) Date of filing: 18.08.2008
(51) Int. Cl.: B32B 27/20, B32B 29/04, B32B 7/12, B32B 27/10, B32B 27/32, B32B 27/36, B32B 29/00

(54) **COMPOSITES FOR PACKAGING ARTICLES AND METHOD OF MAKING SAME**

(30) Priority: 18.08.2007 US 956690 P; 11.01.2008 US 13077
(62) Divisional of application: 17172970.0
(71) Applicant: Smart Planet Technologies, Inc., Irvine, CA 92612 (US)
(72) Inventor: TILTON, Christopher R., Newport Beach, California 92663 (US)
(74) Representative: Wichmann, Hendrik

(57) **Abstract**

The present invention is directed to an unexpectedly unique environmentally friendly composite material structure (22) and storage article fabricated therefrom. The composite structure (22) includes a fiber-containing layer (24), such as a fiberboard layer or other layer having fibers from natural and/or synthetic sources, and a mineral-containing layer (26) covering the fiber-containing layer (24). The mineral-containing layer (26) is substantially continuously bonded to the fiber-containing layer (24) along the surface (25) of the fiber-containing layer (24). The fiber-containing layer (24) and mineral-containing layer (26) can be shaped, sized and manufactured such that the composite structure (22) formed therefrom is capable of being machined to form the storage article. The composite structure (22) has advantages in that it has a high degree of pliability and flexibility that is increased over the pliability of the fiber-containing layer (24) alone, which renders it highly attractive to consumers. The composite structure (22) further has tensile strength and other characteristics that allow it to be readily machined into desired storage article forms, such as box and carton forms. Further advantages include environmentally attractive features such as less water, bleaching agent, formaldehyde usage and discharge as well as 50% or better use of recycled or post consumer recycled fibers.

## Description

### CROSS-REFERENCE TO RELATED APPLICATIONS

This application is a continuation-in-part of U.S. Application No. 12/013,077, filed January 11, 2008, and in addition, claims the benefit of U.S. Provisional Application No. 60/956,690, filed August 18, 2007.

### BACKGROUND OF THE INVENTION

The present invention relates generally to composite structures used to fabricate storage articles such as retail, display, and/or shipping product packages, and more particularly, to composite structures having significant mineral and fiber content, which may include natural fibers, that are highly attractive, efficient to manufacture, and environmentally friendly.

Packages and packaging materials for product retail and shipping purposes are typically designed to be sufficiently durable to allow reliable use of such materials. Considerations that are taken into account in the development of such packages and materials include their resistance to heat, fire, tearing, wrinkling, scuffing, and moisture, as well as resistance to infiltration by rodents and other pests, and the ability of the packages and materials to deter theft. Their tensile and tear strength are also considered. The packages and packaging materials are also desirably relatively inexpensive to manufacture, and are preferably attractive enough to the customer in appearance, print quality, feel, and touch to encourage use of the products as well as to enhance the product image or association.

However, it can be difficult to create packaging products that are both attractive to consumers and inexpensive to fabricate while also being sufficiently durable to meet the needs of retail and shipping use. For example, some lower cost packaging options are poorly configured to prevent theft because of minimal investment in protective structures. Examples of packages that may not be as great of a theft deterrent are common blister packages, consumer style folding cartons and boxes, and shrink-wrapped or flexible film style packaging. While clamshell style packaging is an example of more theft resistant packaging due to the typically higher gauge materials used therein, the packaging is also typically more expensive due to the use of the higher cost materials.

A further problem that exists with prior packaging products is that these products may not incorporate environmentally friendly materials and designs, particularly at low cost levels that offer affordability. Environmentally friendly materials can have desirable attributes such as biodegradability, compostability, a high recycled content, recycle-ability, and may also use less energy, pollute less, and generate fewer greenhouse gases in their manufacture than previous materials. Such environmentally friendly materials are increasingly in demand from consumers and retailers, and can be beneficial for manufacturers by reducing adverse environmental impact of the material.

As used herein, in addition to the above, "environmentally friendly" refers to goods that are considered to inflict minimal harm on the environment. They may also be referred to as "green" or "eco-friendly" or "nature friendly" or others.

Examples of environmentally friendly earth based materials are talc, diatomaceous earth, a mineral-containing layer, mica, silica, glass, clays, zeolytes, and slate, all of which are materials that can be combined with bonding agents to form flat rolls and sheets. High content mineral materials such as these are available with the trade name Viastone from Taiwan Long Meng, Taipei, Taiwan, and other mineral-containing materials from other manufacturers. The mineral-based materials can be fabricated from natural sources, such as limestone among others, and can be biodegradable, photo-degradable, and compostable, use less energy, no water, and fewer chemicals to manufacture than fiber-based materials.

A configuration that is often used for shipping and/or retail packages is a carton or box shape that is space efficient, durable and theft resistant. Carton or box packaging can be formed of paperboard materials such as Kraft boards, box boards, corrugated boards, *etc.,* that are durable and readily machinable, for example by automated scoring, folding, bending, die-cutting, and even cartoning, to form a desired box form. Unfortunately, many cost appealing paperboard materials used to form such packages often do not have a surface that lends itself to high quality printing, with the result that the paperboard boxes and cartons often have an unrefined and industrial look that can be unattractive to consumers. Also, some higher quality carton boards comprise virgin fibers that require the use of substantial amounts of bleaching agents and chemicals. Additionally, paperboard boxes and cartons have little or no resistance to heat, fire, tearing, wrinkling, and scuffing. Finally, great amounts of energy and water usage are required in milling paper and box boards.

While mineral-containing materials offer great advantages compared to carton and paperboards, most particularly in the cost-per-ton category, and they can also be provided in forms that are readily printable, these materials and the products incorporating them are typically very dense with poor yields, lack stiffness and MD/CD fiber structure and strength, and are therefore not readily machinable as they are lacking in the tensile strength and other characteristics that are necessary for proper converting and machining of the product. Because of these drawbacks, minerals are most often found to have no real structural benefit and are not a proper option for packaging.

Accordingly, there remains a need in the art for retail and/or shipping packages that are durable and cost effective while also being attractive to consumers in terms of appearance and touch. There is also a need for retail and/or shipping packages that are durable and attractive while incorporating environmentally friendly materials and being resistant to theft. There is a further need for materials for forming attractive retail and/or shipping products that are readily machinable either at the point of manufacture (*e.g., via* scoring, folding, die-cutting, thermo or vacuum forming) or the point of distribution (*e.g., via* cartoning and gluing). There is also a need to provide packages having a good printing surface so that more attractive product and marketing information and labels may be formed on the packaging.

### Summary of the Invention

The present invention specifically addresses and alleviates the above-identified deficiencies in the art. In this regard, the present invention is directed to an environmentally friendly composite suitable for fabricating storage articles at least partially therefrom (e.g., a retail and/or shipping package). The composite structure includes a fiber-containing layer, such as a paperboard layer or other layer, and a concentrated mineral-containing layer covering the fiber-containing layer, where the mineral-containing layer is substantially continuously bonded to the fiber-containing layer along the surface of the fiber-containing layer at the interface between the layers. The fiber-containing layer and mineral-containing layer can be shaped, sized, and manufactured such that the composite structure formed therefrom is capable of being shaped to form at least a portion of the storage article. Surprisingly, the composite structure formed from the fiber-containing layer and mineral-containing layer has a high degree of pliability and flexibility that is increased over the pliability and flexibility of the fiber-containing layer or mineral-containing layer alone. The composite structure also has enhanced characteristics such as a bright and attractive printing surface that, along with the pliability, render it attractive to consumers. The composite structure further has mass, stiffness, and tensile strength and other characteristics that allow it to be readily machined into desired storage article forms, such as storage boxes and cartons, which have high durability as well as good moisture resistance and biodegradability. In another aspect in accordance with the invention, the fiber-containing layer may comprise only natural fibers.

In another aspect in accordance with the invention, the composite structure is formed by bonding the mineral-containing layer to the fiber-containing layer under conditions selected to form the composite. For example the mineral layer can be adhered to the fiber-containing layer by applying adhesive to the layers and joining the layers together in a hot or cold gluing or adhesion process.

In yet a further aspect in accordance with the invention, a mineral structure suitable for forming storage articles can be provided, the structure comprising an extruded or blown mineral with a bonding agent. The mineral-containing structure is sized and manufactured such that it is capable of being shaped to form a composite layer.

In a more detailed aspect in accordance with the invention, the composite structure is formed into the shape of a box or carton for retail and/or shipping purposes. The composite structure may also be formed into the shape of a container liner, a shipping mailer, a display or display tray, slip or tear sheets, pallet covers, corrugated structures and interior protective packaging components, and other retail and/or shipping components.

In yet further detailed aspects, there is provided a composite structure, of at least two layers, not requiring a bonding film, comprising a substantially non-synthetic, blended, mixed, translucent, interspersed, flaked, matrixed, or thermoplastic structure; by weight containing less than 20% polymers, e.g. co-polymers, homo-polymers, monomers, or poly-lactic acid and other acids and combinations thereof, and contains at least 5% natural mineral content, comprising: layer(s) of non-impregnated rolled or sheeted natural fibers in calipers between around 4 mil and 30 mil, e.g. pulp, cellulosic fiber, cotton, rice, cloth, bagasse, or paper fiber(s) applied, without requiring film stretching, to mineral containing layers; all layers are solid and have opposing flat surfaces that do not require calendaring wherein the fiber-containing layer has a basis weight of from about 20 to about 128 lbs/1000 sqft, and from about 195 to 420 g/m² and a thickness of from about 4 mils to about 30 mils, and a tensile strength of from about 125 to about 900 MD and about 55 to about 400 CD, layers of unheated, non-metal or impregnated minerals with bonding agents wherein the mineral containing layer comprises a basis weight of about 15 to about 240 lbs/1000 sqft, and from about 40 to about 900 g/m², in the form of rolls and sheets that are unblended within the composite comprising at least 10% by weight of the entire composite structure, a density between 0.4 to 1.2 g/m3, calipers between 1.5 mil and 24.0 mil and contain organic minerals e.g. diatomaceous earth, ground calcium carbonate, mica, silica, glass, clays, zeolytes, slate, etc., and combinations thereof. The mineral containing layer is substantially and continuously bonded, without requiring stretching, across the entire contact surface of the fiber containing layers.

In further, more detailed aspects, a pliable composite structure containing a prescribed amount of a thermo-formable bonding agent in the mineral-containing layer(s) that is sufficient to form the storage article shape via thermo, pressure forming, or vacuum forming. The fiber composite structure has been treated to provide a substantial moisture resistance or moisture barrier. The mineral-containing and fiber-containing layers have bio-degradable content. The composite structure has compostable content. The composite structure has photo photo-degradable content. The composite structure has recycled and recyclable content. The fiber structure is poly coated. The composite structure wherein one or more surfaces are coated with water or solvent based heat seal coatings. One or more sides have applied embossed foil or metalized film stamping. One or more layers are corrugated.

The present invention is best understood by reference to the following detailed description of preferred embodiments when read in conjunction with the accompanying exemplary drawings.

### Brief Description of the Drawings

FIGURE 1 is a cross-sectional side view of a composite structure having a fiber-containing layer and a mineral-containing layer directly bonded to and covering the fiber-containing layer in accordance with aspects of the invention, a surface of the mineral-containing layer providing an external surface of the composite structure on which printing may be formed;
FIG. 2 is a cross-sectional side view of a composite structure similar to FIG. 1 but with the fiber-containing layer having first and second mineral-containing layers located on opposite sides with each mineral-containing layer being directly bonded to and covering a surface of the fiber-containing layer in accordance with aspects of the invention, a surface of each of the mineral-containing layers providing first and second external surfaces of the composite structure on which printing may be formed, with neither the first nor the second external surfaces being covered by any other material;
FIG. 3 is a perspective view of a storage box formed of the composite structure shown in either FIGS. 1 or 2 that may be used as a shipping container;
FIG. 4 is a perspective view of a storage box differing from that of FIG. 3, also formed of the composite structure shown in either FIGS. 1 or 2 having a bendable top for closing the storage container, which may be used as a retail box;
FIG. 5 is a front view of a shipping mailer formed of the composite structure of either FIGS. 1 or 2, usable for shipping documents or other items;
FIGS. 6A-6G are perspective views of embodiments of retail displays and display trays formed of the composite structure of either FIGS. 1 or 2 containing bent, cut, and printable portions;
FIG. 7 is a cross-sectional side view of a corrugated structure, portions of which are formed of the composite structure of either FIGS. 1 or 2;
FIG. 8 is a perspective, cut-away view of the corrugated structure shown in FIG. 7;
FIG. 9 is top perspective view of a tear sheet or slip sheet formed of the composite structure shown in either FIGS. 1 or 2 which may optionally be used as a pallet cover;
FIG. 10 is a cross-sectional side view of an interior protective packaging component having the composite structure shaped onto a shock absorbing material; and
FIG. 11 is a perspective, exploded view of a vacuum-forming apparatus suitable for shaping composite structures into shapes for storage articles.

Common reference numerals are used throughout the drawings and detailed description to indicate like elements.

### Detailed Description of the Preferred Embodiments

The detailed description set forth below is intended as a description of presently preferred embodiments of the invention, and is not intended to represent the only forms in which the present invention may be constructed or utilized. The description sets forth the functions and sequences of steps for constructing and operating the invention. It is to be understood, however, that the same or equivalent functions and sequences may be accomplished by different embodiments and that they are also intended to be encompassed by the invention unless they fall outside the scope of the claims.

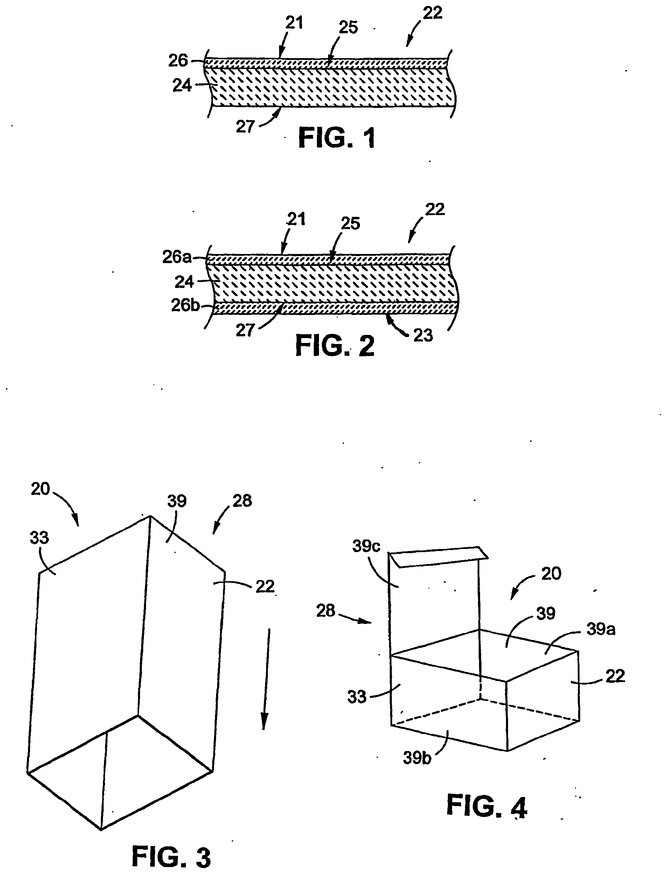

It has been discovered that environmentally friendly and attractive storage articles 20, such as for example retail and/or shipping packages shown in FIGS. 3A and 3B, can be constructed at least in part from a composite structure 22 shown in FIG. 1. In that embodiment, the composite is formed from a fiber-containing layer 24 and a mineral-containing layer 26 covering the fiber-containing layer 24. The mineral-containing layer 26 in this embodiment is directly bonded to the fiber-containing layer. Also, the mineral-containing layer is substantially continuously bonded to the fiber-containing layer 24 along a surface 25 of the fiber-containing layer 24 that is at the interface between the two layers 24, 26, thereby forming a unitary composite structure. The manufacture of the composite structure 22, including the shapes, sizes, and manufacture of the fiber-containing layer 24 and mineral-containing layer 26, is controlled such that the composite structure 22 formed therefrom has a pleasing and attractive pliability, as well as a tensile strength and other processing-related characteristics that are suitable to allow for the production of the storage article 20. The pliability of the composite structure 22 imparts an attractive tactile feel to the articles 20 that is a substantial improvement over prior products. The composite structure 22 can also be readily transformed into desired storage article components 33 by machining the composite structure 22, for example by at least one of scoring, folding, creasing, and die-cutting of the pliable composite structure 22, as well as by using other shaping techniques.

In one embodiment, the composite structure 22 has a pliability that is increased over what the fiber-containing layer 24 would have alone if used apart from the composite structure 22. In other words, the formation of the composite structure 22 provides for a structure having a pliability that is greater than that of the original fiber-containing layer 24 used to form the composite. For example, the pliability of the composite structure 22 may be at least about 20% higher than that of the fiber-containing layer 24 alone, such as even at least about 50% higher, as measured by as measured by bendability and pliability standards known to those of ordinary skill in the art, including ASTM D228-02, #10 and ASTM D6125-97 (2002), both of which standards are herein incorporated by reference in their entireties.

As known to those of ordinary skill in the art, a "composite" material is a material comprising two or more substances or layers having different physical characteristics, in which each substance or layer retains its identity while contributing desirable properties to the whole. The term "composite" may especially refer to those materials for which each substance contributes desirable properties to the whole that are greater than the otherwise additive contribution of each substance in the absence of the other, in effect creating a material that has properties greater than the mere sum of its parts. This is in contrast to, for example, prior art paper fibers and natural fibers with coatings and films, heated and stretch applied films, among others, designed primarily for moisture barrier and printability and print quality improvements that do not materially change the performance, environmental, or structural characteristics in a significant manner.

The pliable composite structure 22 among others, according to the present invention contain unique specified material basis weights, composition, and structural attributes that are directly bonded along substantially the entire interface between the layers 24, 26, such as substantially continuously along an entire surface 25 of the base layer 24, to form a single composite structure. The resulting structure has far different performance objectives and out performs other packaging art. Also, the characteristics and manufacture of the layers 24, 26 and composite structure 22 are selected such that the combined composite structure 22 has properties including pliability and machinability that go beyond the capabilities of either material alone and that are not achieved by the prior art product.

The composite structure 22 can be formed by controlling the sizes, shapes, and manufacture of the mineral-containing layer 26 and fiber-containing layer 24, as well as the composite structure manufacturing process. For example, parameters that can be controlled to achieve the improved composite structure 22 having the desired pliability and aesthetic characteristics, as well as desired durability and machinability, can include at least one of the thickness, the basis weight, the density, the tensile strength, and the chemical content of the layers 24 and 26.

In one embodiment, the chemical composition of the mineral layer 26 is controlled to provide the composite structure 22 having the desired characteristics. Suitable mineral-containing layers 26 may comprise from up to 85% by weight of minerals of various types and compositions. The mineral-containing layer 26 further comprises a bonding agent mixed with the mineral component that provides a medium for bonding the mineral content within the layer 26. In one embodiment, a type and prescribed amount of the bonding agent can be added to the mineral-containing layer 26 that is sufficient to provide a composite structure 22 that has a desired level of pliability, while also being readily machinable.

The composition of the fiber-containing layer 24 can also be controlled to provide a composite structure 22 having the desired characteristics, such as the desired pliability, stiffness, mass, caliper, dead fold, and machinability of the structure 22. The fiber-containing layer 24 comprises at least one of many natural fibers, and has desirable tensile strength and other characteristics that render the layer suitable for machining processes used to form the storage article 20. For example, the fiber-containing layer 24 may be in the form of a fiberboard layer, and even a paperboard layer, such as one of the various different types of paperboard roll and sheet materials that are known in the art. Examples of suitable fiberboard and/or paperboard materials include, for example, recycled folding boxboards (RFB), bleached Kraft board, unbleached Kraft board, such as CIS and C2S solid bleached sulfate boards (SBS), as well as coated recycled boards (CRB) and uncoated recycled boards (URB), clay coated light black boards (CCLB) and triplex and duplex boards.

The fiberboards and/or paperboards used for the fiber-containing layer 24 typically contain primarily cellulosic and/or wood pulp-based fibers, although they may also have other types of natural fiber content that fit the desired structure. The fiber-containing layer 24 also desirably comprises a relatively high level of recycled and/or post-consumer recycled fiber content. Also, tree free fibers offer attractive environmental alternatives. For example, the recycled folding boxboard and coated and uncoated recycled boards can contain 100% recycled content, of which up to 35% by weight is post-consumer recycled content. The triplex and duplex boards, which are coated recycled boards having a high content of post consumer recycled fibers, can contain up to 100% recycled content and greater than 90% or 95% post-consumer recycled content, respectively.

In one embodiment, the fiber-containing layer consists of only natural fibers. In another embodiment, the fiber-containing layer may comprise synthetic fibers.

The thickness of one or more of the layers 26 and 24 can also be controlled to provide more or less pliability and machinability in the resulting composite structure 22. The thicknesses of the layers 24 and 26 are also selected such that the composite 22 formed therefrom is readily machinable. Furthermore, the thicknesses of the layers 26 and 24 are also selected with regard to desired durability requirements, with thicker layers providing more durability in some embodiments over very thin layers. A suitable thickness of the mineral-containing layer 26 that provides good pliability as well as durability and machinability of the composite structure 22 may be, for example, from about 1.5 to about 30 mils (0.038 to about 0.762 mm). As used herein, a "mil" is one-thousandth of an inch. A suitable thickness of the fiber-containing layer 24 can vary according to the density, stiffness, and tensile strength of the type of paperboard being used. For example, the thickness of the layer may be from about 4 mils to about 28 mils (0.1 to about 0.711 mm) for paperboard types such as CIS and C2S SBS paperboard, recycled folding boxboard, bleached and unbleached Kraft board, coated and uncoated recycled board, and folding box board, and may be from about 12 mils to about 23 mils (0.31 to about 0.58 mm) for paperboard types such as triplex and duplex paperboards.

The basis weights and densities of the mineral-containing layer 26 and fiber-containing layer 24 are also selected to provide a composite structure 22 having the desired attributes. The basis weight and densities of the fiber-containing layer 24 and mineral-containing layer 26 are selected to allow for ready machinability of the final composite structure 22, as a finished composite structure 22 that is either too light or too heavy may not be suitable for manipulation by standard paper and paperboard machines, such as scoring, folding, die-cutting, gluing, and cartoning machines. A suitable basis weight of the mineral-containing layer 26 can be, for example, from about 15 lbs/1000 ft² to about 240 lbs/ft², and a suitable weight may be from about 40 g/m² to about 900 g/m². A suitable basis weight of the fiber-containing layer 24 can be from about 26 lbs/1000 ft² to about 130 lbs/100 ft², or from about 210 g/m² to about 450 g/m². For example, for CIS and C2S SBS board, recycled folding boxboard, unbleached Kraft board, coated recycled board, uncoated recycled board and folding box board, a suitable basis weight may be from about 53 lbs/1000 ft² to about 128 lbs/1000 ft², and also from about 210 g/m² to about 420 g/m². For fiber-containing layers 24 containing triplex and duplex boards, a suitable basis weight may be from about 41 lbs/1000 ft² to about 110 lbs/1000 ft², as well as from about 225 g/m² to about 450 g/m². Other natural fibers such as bagasse, cotton, pulp, cloth, etc., can be used assuming the performance and material attributes fall within the stated ranges.

The fiber-containing layer 24 is also selected to have tensile strength characteristics that result in the formation of the composite structure 22 that can be readily machined. The desired tensile strength characteristics can include the tear resistance of the paperboard layer 24 as measured in machine direction ("MD") or cross-direction ("CD"). The cross-direction (CD) is typically defined as the direction across the web of the paperboard, *i.e.* at a ninety degree (90°) direction with respect to the grain of the fiber in the fiberboard layer 24. The machine direction (MD) is typically defined as the direction that runs parallel to the grain of the fibers in the fiberboard layer 24. The MD and CD tensile strengths of paperboard materials can be measured according to the ASTM D5342-97 Standard (also called the Taber-Type testing standard), which is herein incorporated by reference in its entirety, as is known to those of ordinary skill in the art. "ASTM" refers to the American Society For Testing And Materials, commonly also referred to as ASTM International.

Materials having a tensile strength within a specified range are capable of being processed by paperboard machining equipment, such as automated scoring, folding, die-cutting, and forming machines, to provide final storage article shapes. In contrast, materials that are lacking in proper tensile strength characteristics may be too brittle or stiff, or alternatively too elastic, to be machined in standard paperboard machining processes. In one embodiment, a suitable paperboard layer 24, such as the box boards, Kraft boards and recycled boards described above, has a tensile strength as measured by the ASTM D5342-97 Standard (taber-type standard) of from about 125 to about 900 MD, and from about 55 to about 400 CD. In another embodiment, a suitable paperboard layer 24, such as a triplex or duplex paperboard layer 24, has a tensile strength as measured by the ASTM D5342-97 Standard, of from about 144 to about 685 MD.

It should be noted that the mineral-containing layer 26 is not typically selected with regards to a CD or MD stiffness, dead fold performance or tensile strength, as the mineral-containing layer effectively does not have a CD or MD tear strength value that is measurable by the same standards used for paperboard. The lack of a comparable tensile strength in the mineral-containing layer is one of the characteristics that renders a stand-alone mineral-containing layer 26 unsuitable for the standard machining processes that are typically used to shape and form paperboard materials and other materials into finished storage articles. Higher content polymer materials and synthetic combinations using coextrusion, multiple layer laminations, and stretching can be considered; however, extruded and blown film polymer costs and yields are unfavorably expensive compared to the cost of earth based minerals that are held with bonding agents. The stated art specifications are unique and maximize/optimize the finished composite for cost and performance, using stated mineral and fiber specifications.

The composite structure 22 formed from the continuously bonded mineral-containing layer and paperboard layer has material characteristics that render it suitable for use in the formation of the storage article 20, including machinability and pliability. In one embodiment, the composite structure 22 comprises a paperboard layer 24 directly bonded to a mineral-containing layer 26 on one or more surfaces 25 and 27 of the paperboard layer, to form either double or triple layer composites suitable for use in, for example, storage boxes or cartons. FIG. 2 shows an example of a triple layer composite structure having first and second mineral-containing layers 26a and 26b, directly bonded to the top and bottom surfaces 25 and 27 of the paperboard layer 24. FIG. 1 shows an example of a double layer composite. Such double or triple layer composite structures 22 can have a basis weight of from about 66 lbs/1000 ft² to about 175 lbs/1000 ft², a density of from about 216 g/m² to about 880 g/m², a tensile strength of about 125 to about 900 MD and about 55 to about 400 CD, as measured by the ASTM D5342-97 Standard, and a thickness of from about 8 mils to about 32 mils (0.2 to about 0.81 mm).

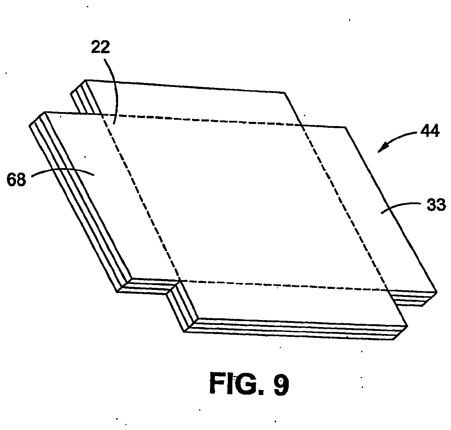

In yet another embodiment, the composite structure 22 comprises multiple sheets of paperboard layers 24 bonded to mineral-containing layers 26, as in the formation of slip or tear sheets 44, as shown for example in FIG. 9. Such multi-layer composite structure 22 can have a basis weight of from about 198 lbs/1000 ft² to about 525 lbs/1000 ft², a density of from about 648 g/m² to about 2,640 g/m², a tensile strength of about 375 to about 2700 MD and about 165 to about 1,200 CD, as measured by the ASTM D5342-97 Standard, and a thickness of from about 45 mils to about 80 mils (1.14 to about 2.0 mm). While the multi-layer composite structure 22 that makes up the relatively heavy slip and tear sheets 44 may not be as readily machinable as lighter weight composite structures, the multi-layer composite structure 22 nonetheless has enhanced pliability that renders it aesthetically appealing, and retains sufficient paperboard characteristics that render it suitable for its function.

The composite structure 22 can be fabricated using a variety of different manufacturing techniques. For example, a method of forming the composite structure 22 can comprise a milling step in which paperboard is formed into sheets having the desired characteristics and thickness, and the resulting sheets are gathered onto rolls. The fabrication process can also include the step of extrusion or extrusion-lamination of the mineral-containing layer material into sheets having the desired characteristics and thickness, and gathering the resulting sheets into rolls. The fabrication process can further comprise directly bonding the paperboard layer 24 to the mineral-containing layer 26 to form the improved composite structure 22. The paperboard layer 24 may be at least partially covered with the mineral-containing layer 26 on one or more surfaces of the layer 24, such as on top and bottom surfaces 25, 27, or on only a single surface, as shown in FIG. 1.

The paperboard layer 24 can be bonded to the mineral-containing layer 26 by adhering the layers 24 and 26 to one another, for example by applying pressure to one or more of the materials forming the layers 24 and 26, or by optionally applying an adhesive between the layers 24 and 26. In one embodiment, the pliable composite structure 22 is formed without the use of added adhesive between the layers 24 and 26. In yet another embodiment, an adhesive is applied to a surface of one or more of the layers 24 and 26, such as a top surface 25 of the paperboard layer 24, to adhere the layers 24 and 26 to one another. In this embodiment, the adhesive may be applied to substantially the entire surface 25 at the interface 19 between the paperboard layer 24 and mineral-containing layer 26 to ensure bonding of the layers 24 and 26 across the entire surface 25. The conditions under which bonding of the layers 24 and 26 is carried out can be selected to provide optimum adhesion of the layers 24 and 26 to one another, as well as a substantially continuous bond between the layers 24 and 26 that extends across the entire length and width of the surface 25. For example, in a suitable hot application process for bonding the layers 24 and 26, an adhesive having a viscosity of from about 660 cP to about 1,480 cP is applied to one or more of the layers 24 and 26 at an elevated temperature of from about 300° F (148.9° C) to about 385° F (196.1° C). In an example of a suitable cold application process for bonding the layers 24, 26, an adhesive having a viscosity of from about 1,000 cP to about 2,100 cP is applied at a temperature of from about 27.5°C to about 30°C.

The final composite structure 22 has the improved characteristics as shown in Table 1 below. As can be seen from the table, the effect of forming the composite structure 22 is that the desirable tensile strength and other machine-processing related characteristics of the paperboard or other natural fiber layer 24 are maintained, thereby providing a durable composite structure 22 that is capable of being machined by standard paperboard machining processes, while also achieving a pliability of the composite structure 22 that is aesthetically appealing and that is greater than that of the paperboard material alone.

**Table 1**

| Material | Tensile Strength (MD) | Tensile Strength (CD) | Pliability | Machinability | Photo-degradability |
|---|---|---|---|---|---|
| Paperboard | 125-900 | 55-400 | No | Yes | No |
| Mineral layer | None | None | Yes | No | Yes |
| Composite Paperboard/Mineral Structure | 125-900 | 55-400 | Yes | Yes | Yes |

The composite structure 22 also has other benefits over non-composite paperboard materials used for the packaging and storage article 20. For example the composite structure 22 provides an improved moisture barrier over typical paperboard materials due to the bonding agent used in the mineral-containing layer. Such agents may include high density polyethylene, bio-polymers, polymers, or poly-lactic acids. The bonding agent, along with the minerals, also provide an improved fire and heat resistance for the composite structure 22 by significantly raising the flash point. Polymers such as HDPE can be made to be photodegradable, typically by introducing one or more additives, typically during extrusion, such as ketone groups sensitive to UV light which can cause scissioning of the polymer, or other photosensitizing additives that can initiate photooxidation of the polymer, also resulting in scissioning of the polymer. Where the fibers of the fiber- or paperboard-containing layer are all natural, the bio-degradability of the composite structure is greatly increased. Furthermore, the increased density of the mineral-containing layer results in improved rodent and other pest protection because of the increased difficulty in breaching the layer.

Furthermore, the increased density of the composite structure having the mineral-containing layer and the fiber-containing layer disclosed herein results in greater theft deterrent without the increased cost of the prior art materials. The increased density of the composite structure in accordance with the invention also provides greater wrinkle resistance and also provides static-electricity resistance due to its composition.

The composite structure 22 also has a premium printing surface 21 by virtue of the mineral-containing layer 26. Furthermore, the composite structure 22 is estimated to require 25% to 65% less water for manufacture than similar paperboard materials, as the mineral-containing layer containing layer 26 essentially does not require water usage for its fabrication. Also, the composite structure 22 renders certain non-biodegradable paperboards biodegradable and compostable, such as CIS and C2S SBS paperboard, unbleached Kraft board and folding box board. Because the minerals are often environmentally friendly substances, the composite structure 22, with the minerals and natural fibers, is fully recyclable, can have a recycled fiber content or post-consumer recycled fiber content of from about 35% to about 75%, and also has an estimated 20% to 65% reduction in air discharge, formaldehyde, and bleaching agents over standard paperboard materials.

Various machining steps can be performed to shape the composite structure 22 formed from the mineral-containing layer 26 and paperboard layer 24 into the desired storage article form. The machining steps can include folding, bending, creasing, and otherwise forming or pressing the composite structure 22, as well as cutting steps and gluing steps to form the desired shapes. The machining steps can be carried out at one or more of the point of manufacture and the point of distribution. For example, machining steps can be carried out at the point of manufacture to cut, score, and fold the composite structure 22 into a desired shape that may be suitable for shipping and/or storing of the article 20. At the point of distribution of the storage article 20, gluing and forming steps can be performed to achieve the final storage article shape, such as cartoning steps in the case of the manufacture of cartons or boxes.

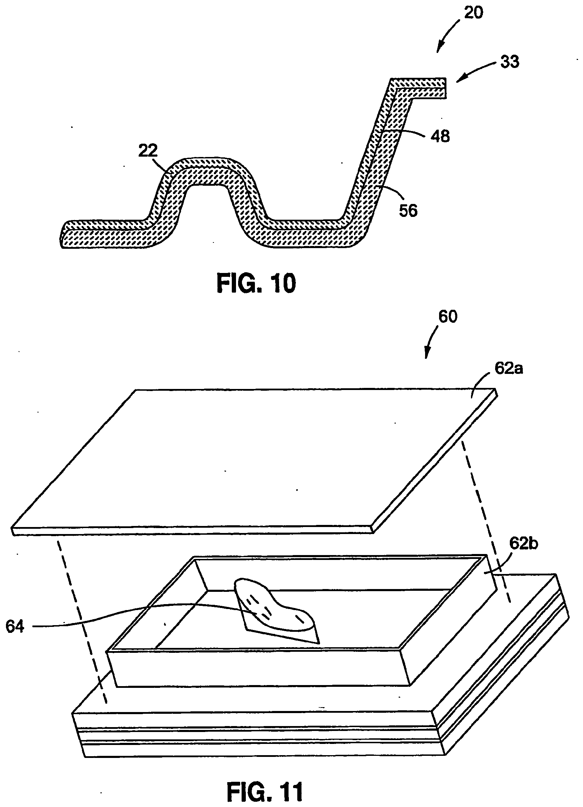

In further embodiments, the individual materials and/or pliable composite structure 22 are formed into a desired shape for the storage article 20 by molding under pressure, heat, or vacuum. For example, in a vacuum process, one or more of the material and composite is forced against a mold under the force of vacuum, such that the material or composite adopts a shape conforming to the mold. As another example, in a thermoforming process, the materials and/or composite are heated while pressed against a mold to deform the material until it adopts a desired shape. Such molding may allow the pliable composite structure 22 to adopt desired shapes, including even rounded or curved shapes. An example of a vacuum molding press 60 is shown in FIG. 11, which shows top and bottom press plates 62a and 62b and a mold 64, in which the pliable composite structure 22 would be placed between the presses 62a and 62b and mold 64 and then vacuum pressed onto the mold by application of a vacuum between the presses 62a and 62b. The pliability of the structure 22 may also allow various folding and creasing steps to be performed to form the final component shape, without requiring the application of heat or vacuum. A combination of various molding and/or shaping steps may also be performed to form the final storage article 20, as well as various cutting and shaping steps and steps to adhere additional decorative or functional parts. Also, one or more composite structures 22 can be stacked or adhered to one another to form a desired storage article component 33.

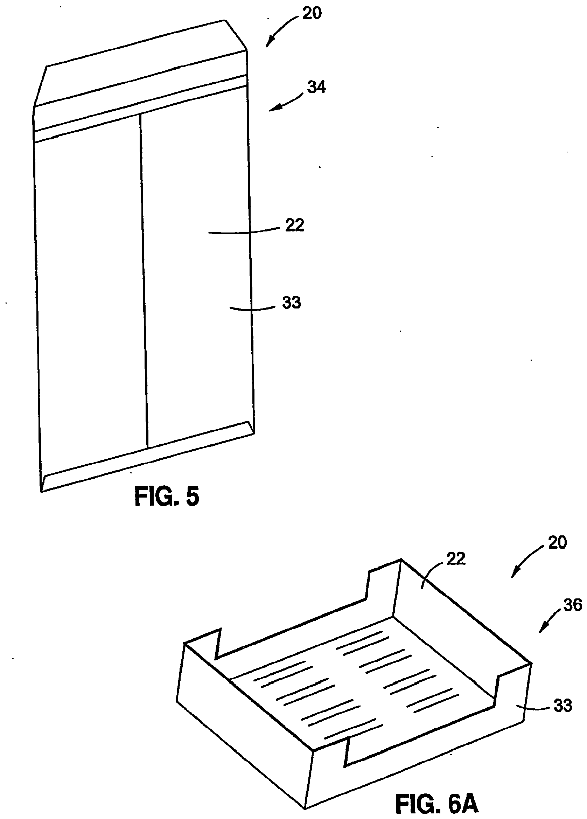

In one embodiment, the composite structure 22 that is used to form a storage article 20 such as at least one of a retail package 20 shown in FIG. 4 and a shipping package 20 shown in FIG. 5 having printing formed on portions thereof, such as printed advertisements or information about the product contained therein. For example, the storage article 20 can have printing on one or both sides of the mineral-containing layer or layers 26 (FIGS. 1 and 2), such as on a printing surface 21 and also or alternatively on one or both sides of the paperboard layer 24 as in the case of FIG. 2 where there are two mineral-containing layers 26. The printing can be carried out by well-known printing techniques, such as flexographic and lithographic printing. Storage articles 20 having composite structures 22 with mineral-containing layers 26 can be attractively and brightly printed to increase consumer demand for the product as well as to convey important information about the product and contents to the customer. In this embodiment, a printing step comprises feeding the base material or mineral-containing material through a printer. The printer can print on one or multiple surfaces of the material, and the same material can also be sent through the same or a subsequent printer.

As shown in FIGS. 1 and 2, the mineral-containing layer 26 or layers each have premium printing surfaces 21 (FIG. 1) and 23 (FIG. 2). The surfaces in these figures may be used to accept ink for text or graphics as desired. In this embodiment, the printing surfaces 21 and 23 comprise an external surface or surfaces of the composite structure 22 and are not covered by another layer of any type. However, they may accept embossed foil or metalized film stamping or other such material.

In one embodiment, the composite structure 22 is formed into the shape of a component 33 comprising a box 28 for at least one of retail and shipping, as shown for example in FIGS. 3 and 4. The box 28 may be in the form of a cube, rectangular or other box shape that is sized to contain a retail or shipping product. In one embodiment, the box 28 is formed by preparing the composite structure 22 in the form of a pliable sheet, for example by performing the milling step and other processing steps as described above, cutting the structure into the desired shape, and then folding and/or creasing the sheet, either manually or by machine, such as *via* an automated cartoning process, to form the final three-dimensional box shape. In the embodiment shown in FIG. 4, the composite structure 22 forms the walls 39 of the box, including bottom and side walls 39a and 39b as well as a fold-over lid portion 39c. The box 28 formed from the composite structure 22 having high pliability has a smooth and flexible tactile feel that is attractive and pleasing to the touch, while also being sturdy and durable enough to allow use in retail on store shelves and displays.

In one embodiment, the pliability of the box 28 is such that it can be readily folded and unfolded into the box shape 28, thereby allowing the user to store the box 28 in the unfolded state and then quickly fold the box into shape when needed for use. The box 28 is also desirably sturdy enough to withstand vertical or other stacking of the box 28 with other boxes, such as in pallets for shipping or storage of products, and may also provide substantial theft deterrence. In one embodiment, the attractive feel of the box 28 as well as the enhanced luster and shine of the box imparted by the ground calcium-carbonate-containing material makes the box 28 particularly suitable for the retail of high-end and luxury products where the appeal of the overall retail package is important, such as in the retail of perfumes, cosmetics and jewelry.

In yet another embodiment, the composite structure 22 forms a part of a shipping mailer 34, such as an envelope used to ship documents and other objects through UPS, FEDEX, USPS, etc., as shown in FIG. 5. The composite structure 22 may be used to form a part of or even all of the mailer structure, excluding sealing parts such as adhesive or attachment brads that seal the mailer opening for shipping, and may be fabricated by using a series of folding, creasing and adhesive steps to prepare the desired mailer shape. The composite structure 22 is desirably sufficiently pliable such that documents and other objects can be readily accommodated in the mailer 34, while also being sufficiently durable to resist tearing, snagging and ripping of the shipping mailer 34. The shipping mailer 34 formed from the composite structure 22 provides numerous advantages over prior mailers 34 not having the improved composite structure 22. For example, the shipping mailer 34 having the composite structure imparts improved moisture resistance as discussed above while also allowing for highly attractive printing on the packages, so that instructions regarding the content, shipping instructions or advertisements can be printed on the mailer. This is in contrast to prior mailers, such as *e.g.* paper mailers, which are typically fabricated to be either water resistant or readily printable, but do not typically have a highly attractive and readily printable surface that is also moisture resistant and durable, as is the case for mailers having the mineral-containing composite layer 26 (FIG. 1).

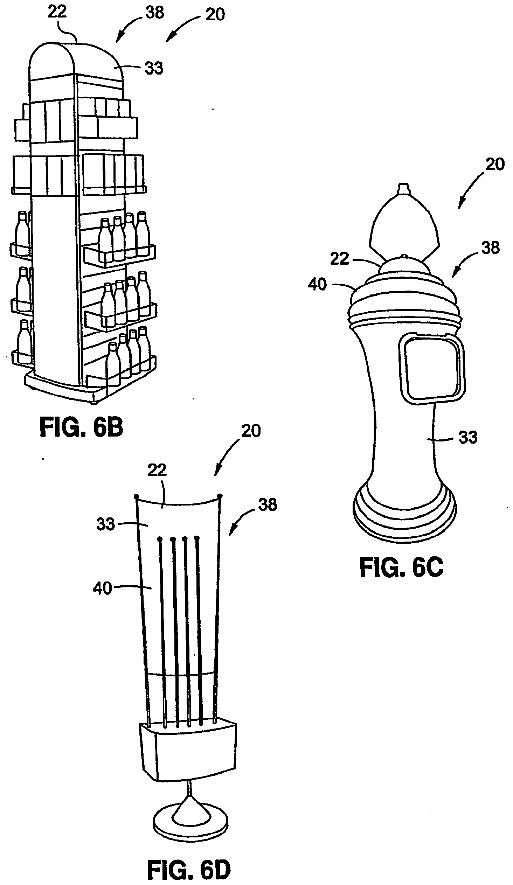

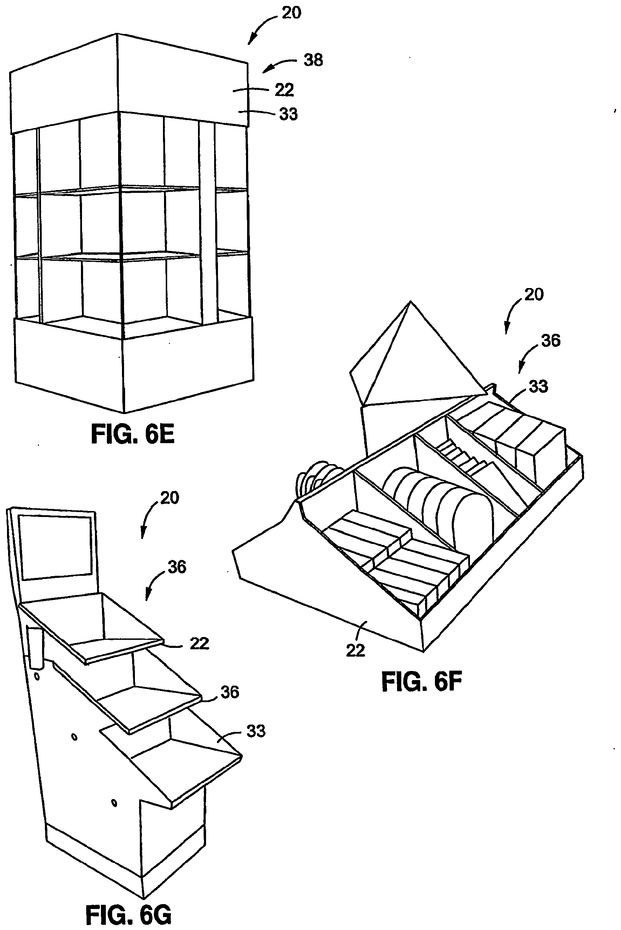

Other embodiments of the storage article 20 having the composite structure 22 include display trays 36 and other sales displays 38, as show in FIGS. 6A-6G. For example, in the embodiments shown in FIGS. 6A and 6F, the composite structure 22 is cut, shaped and folded into the shape of display trays 36 capable of holding and displaying products for retail. The trays 36 can have walls and a base sized to hold a desired number of objects, and can also contain cutouts, as shown in FIG. 6A, or other display arrangement that holds the objects in the tray 36. FIGS. 6B-6E and 6G show embodiments of displays 38 that are either formed from or contain the composite structure 22 having the mineral-containing material. For example, in the embodiments shown in FIGS. 6B-6D, the composite structure 22 is formed or molded to form parts of the display 38. The composite structure 22 can be molded by bending or folding, as well as via thermo or vacuum-forming to form desired parts of the display 38.

The embodiments shown in FIGS. 6B, 6D, and 6E show display cases formed from portions of printed, folded and glued composite structures 22, optionally with conventionally lithographed parts. The embodiment shown in FIG. 6C shows a display 38 that has been molded into a desired shape by vacuum forming front and back halves of the display that are formed of the composite structure 22. The composite structure 22 is desirably sufficiently flexible such that it can be molded with vacuum or thermoforming techniques to form rounded parts 40, such as those shown in the embodiment of FIG. 6C, which may be particularly desirable for attractive displays 38, as well as in other products. FIG. 6G shows an embodiment in which the composite structure 22 has been used to form a display 38 having display trays 36. The display 38 and display trays 36 that are formed from or otherwise contain the composite structure 22 provide highly attractive and moisture resistant displays and trays, that can be brightly and attractively printed for retail and advertisement purposes and are highly scuff resistant. The composite structure 22 is advantageously shapeable into the desired retail form, such as by folding or molding or other machining of the structure 22, and thus provides a highly adaptable material for use in improved retail displays.

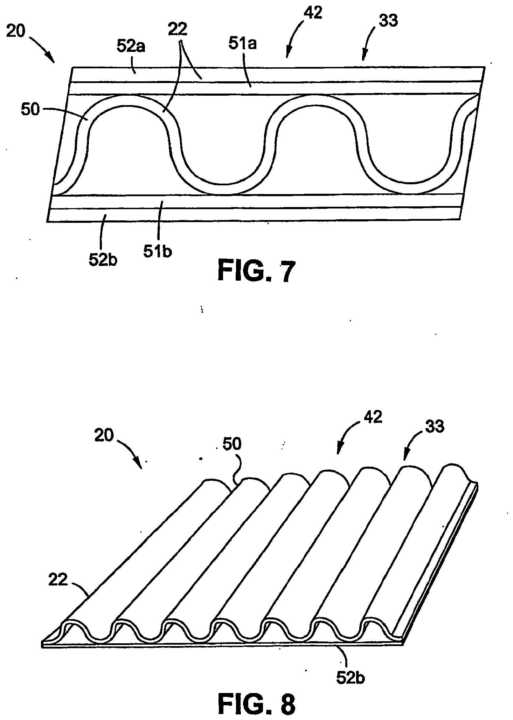

Other uses of the composite structure 22 include its use to form corrugated structures 42, embodiments of which are shown in FIGS. 7 and 8, as well as in the formation of slip or tear sheets or protective top pallet covers 44, an embodiment of which is shown in FIG. 8, as an interior protective packaging component 48, an embodiment of which is shown in FIG. 9, and also molded interior protective packaging components 48, embodiments of which may be formed through the use of the press 60 shown FIG. 11. In the embodiment shown in FIGS. 7 and 8, corrugated flutes 50 are sandwiched in between top and bottom sheets 52a and 52b to form corrugated structures 42 suitable for the formation of corrugated boxes and other similar applications. One or more of the flutes 50 and sheets 52a and 52b, may be formed of the composite structure 22, to form a corrugated structure 42 having enhanced pliability as well as moisture and pest resistance, as discussed above. Additionally and/or alternatively, the composite structure 22 may contain a mineral-containing layer 26 (FIG. 1) that covers a paperboard layer 24 that is overtop of corrugated parts such as flutes 50. For example, as shown in FIG. 7, the composite structure 22 may comprise a paperboard layer 24 that corresponds to at least one of an inner top and bottom sheet 51a and 51b, and that is a part of a corrugated material containing flutes 50, with the base layer 24 being covered by at least one of top and bottom sheets 52a and 52b comprising the mineral-containing layer 26.

In the embodiment shown in FIG. 9, the composite structure 22 is formed into slip sheets or tear sheets 44 for storing or shipping products, which sheets 44 can also be scored or folded for use as protective top pallet covers. As is also shown in FIG. 8, a plurality of composite sheets 44 can be adhered together to form a multi-layer structure 68, such as a multi-layer tear sheet 44.

In the embodiment shown in FIG. 10, the interior protective packaging component 48 comprises a composite structure 22 that is molded into a shape suitable for conforming to or otherwise holding and protecting an object within a shipping package, or to fill voids in a package, to stabilize and protect fragile items for shipping. The composite structure 22 may be molded into a desired shape and then placed overtop of a shock absorbing material 56, such as any of those described above. The composite structure 22 used in these embodiment imparts those advantages as described above, including increased pliability to allow for the formation of the desired structures as well as to improve the look and feel of the structure. The structure 22 also has improved moisture, theft and pest resistance, while also maintaining good fire and heat resistance, as discussed above. The structure 22 further allows high quality printing thereon to allow for user instructions or advertisements to be printed on the products.

The composite structure 22 (FIG. 1) has characteristics such as pliability and tensile strength that render it suitable for the formation of storage articles, including any of those storage articles described and shown herein as well as others. The composite structure 22 can be shaped, sized, and manufactured such that it is pliable and such that it is capable of being shaped to form numerous types of storage articles.

As used herein, non-mineral natural fibers include animal fibers such as wool and silk and vegetable fibers such as cotton and cellulose.

The invention differs from prior art coatings in that in the invention, a composite is provided. As used herein, a coating is a material applied to other materials such that the coating conforms to the material it is applied to. A composite layer does not conform to the surface size and shape of the other materials in the composite; it, as a layer with its own unique shape and conformation, combined with one or more other layers forms a new composite material with improved or greatly altered structural and strength characteristics.

Additional modifications and improvements of the present invention may also be apparent to those of ordinary skill in the art. Thus, the particular combination of components and steps described and illustrated herein is intended to represent only certain embodiments of the present invention, and is not intended to serve as limitations of alternative devices and methods within the spirit and scope of the invention. Along these lines, it should be understood that the storage articles 20 having the pliable composite structure 22 may take any of a variety of forms that are known or later developed in the art, and further contemplates that existing or newly formed storage articles 20, such as newly formed retail and/or shipping packages, should fall within the scope of the present invention. Also, it should be understood that the paperboard layer 24 and mineral-containing layer 26 can comprise various different materials such as other packaging materials and bonding agents that are other than those specifically described.

The following labelled statements set out further aspects of the present invention:
A1. A composite structure by weight containing less than 20% polymers and containing at least 5% natural mineral content, the composite structure comprising;
   a fiber-containing layer formed of non-impregnated rolled or sheeted natural fibers in calipers between around 4 mil and 30 mil, the layer being solid and having opposing flat contact surfaces that do not require calendaring, wherein the fiber-containing layer has a basis weight of from about 20 to about 128 lbs/1000 sq. ft., and from about 195 to 420 g/m², and a thickness of from about 4 mils to about 30 mils, and a tensile strength of from about 125 to about 900 MD and about 55 to about 400 CD; and
   a mineral-containing layer formed of unheated, non-metal, or impregnated minerals with a bonding agent to form a mineral composite, wherein the mineral-containing layer comprises a basis weight of about 15 to about 240 lbs/1000 ft², and from about 40 to about 900 g/m², in the form of rolls and sheets that are unblended within the mineral composite comprising at least 10% by weight of the entire composite structure, a density between 0.4 to 1.2 g/m³, calipers between 1.5 mil and 24.0 mil and contain organic minerals;
   wherein the mineral-containing layer is substantially and continuously directly bonded, without requiring stretching, across the entire contact surface of the fiber-containing layer.
A2. The composite structure of clause A1 wherein the fiber-containing layer and the mineral-containing layer are machined, sized, and manufactured such that the composite structure formed therefrom becomes a storage article.
A3. The composite structure of clause A1 wherein the composite structure has a pliability that is at least 10% higher than the pliability of the fiber-containing layer alone.
A4. The composite structure of clause A1 wherein the composite structure has both primary and secondary packaging uses.
A5. The composite structure of clause A1 wherein the mineral-containing layer is a pliable mineral composite containing a prescribed amount of a thermo-formable bonding agent sufficient so that a storage article containing the mineral-containing layer may be formed into a selected shape via thermo-forming, pressure forming, or vacuum forming
A6. The composite structure of clause A1 wherein the mineral composite has been treated to provide a substantial moisture resistance.
A7. The composite structure of clause A1 wherein the mineral-containing layer and the fiber-containing layer have bio-degradable content.
A8. The composite structure of clause A1 wherein the mineral-containing layer and the fiber-containing layer have compostable content.
A9. The composite structure of clause A1 wherein the mineral-containing layer and the fiber-containing layer have photo-degradable content.
A10. The composite structure of clause A1 wherein the mineral-containing layer and the fiber-containing layer have recycled and recyclable content.
A11. The composite structure of clause A1 wherein the fiber-containing layer is poly coated.
A12. The composite structure of clause A1 wherein one or more surfaces are clay coated.
A13. The composite structure of clause A1 that is static-electricity resistant.
A14. The composite structure of clause A1 wherein the flash point of the composite structure is higher than predominately fiber structures alone.
A15. The composite structure of clause A1 which is more rodent resistant than predominately fibers structures alone.
A16. The composite structure of clause A1 which is more theft resistant than predominately fiber structures alone.
A17. The composite structure of clause A1 which is more wrinkle resistant than predominately fiber structures alone.
A18. The composite structure of clause A1 wherein one or more surfaces are coated with water or solvent based heat seal coatings.
A19. The composite structure of clause A1 wherein one or more surfaces have applied embossed foil or metalized film stamping.
A20. The composite structure of clause A1 wherein one or more layers are formed into a corrugated shape.
A21. The composite structure of clause A1 formed of materials that require from approximately 10% to 30% less water usage in production than predominately fiber structures alone.
A22. The composite structure of clause A1 which saves from 10% to 30% usage and discharge of formaldehyde and bleaching agents than during the manufacture of predominately fiber structures alone.
A23. The composite structure of clause A1 wherein the mineral-containing layer comprises a mineral-layer bonding agent selected of at least one of the group consisting of high density polyethylene, bio-polymers, polymers, and poly-lactic acids.
A24. The composite structure according to clause A1 wherein the fiber-containing layer comprises at least one of the group consisting of bleached Kraft board, unbleached Kraft board, recycled folding boxboard, folding box board, coated recycled board, and uncoated recycled board.
A25. The composite structure according to clause A1 comprising a basis weight of from about 66 to about 175 lbs/1000 sq. ft., and from about 216 to about 880 g/m², a thickness of from about 8 mils to about 36 mils, and a tensile strength of from about 125 to about 900 MD and about 55 to about 400 CD.
A26. The composite structure according to clause A1 comprising a basis weight of from about 198 to about 525 lbs/1000 sq. ft., and from about 648 to about 2640 g/m², a thickness of from about 45 mils to about 80 mils, and a tensile strength of from about 375 to about 2700 MD and about 648 to about 2640 CD.
A27. The composite structure according to clause A1 wherein the composite structure is formed by the steps of:
   milling the fiber-containing layer;
   extruding the mineral-containing layer; and
   bonding the mineral-containing layer to the fiber-containing layer, by performing either:
      a hot application process comprising bonding the layers with an adhesive having a viscosity of from about 660 cP to about 1,480 cP at a temperature of from about 300°F to about 385°F;
      a cold application process comprising bonding the layers with an adhesive having a viscosity of from about 1,000 cP to about 2, 100 cP at a temperature of from about 27.5°C to about 30°C;
      applying an adhesive containing urethane;
      applying curable adhesives such as phenol-type, epoxy type, acrylic type;
      applying an adhesive combination of polyester polyol or acrylated polypol and a polyiscoyanate; or
      performing in-line extrusion-lamination, using said adhesives, among others, as provided above;
      whereby the composite structure is capable of being machined to form the storage article.
A28. The composite article of clause A1 wherein the structure is formed into a storage article.
A29. The composite article of clause A1 wherein the structure is formed into a pallet sheet slip sheet or tier sheet.
A30. The composite article of clause A1 wherein the structure is formed into a retail display or box.
A31. The composite article of clause A1 wherein the structure is formed into a shipping envelope.
A32. The composite article of clause A1 wherein the structure is formed into a corrugated configuration.
A33. A method of making a composite structure that includes mineral-containing layer, the method comprising the steps of:
   providing a fiber-containing layer comprising at least one layer of natural fibers;
   providing a mineral-containing layer; and
   adhering the mineral-containing layer directly to the fiber-containing layer by bonding the mineral-containing layer to the fiber-containing layer substantially continuously across a surface of the fiber-containing layer, thereby forming the composite structure.
A34. The method of clause A33 further comprising shaping, sizing, and manufacturing the composite structure such that it is capable of being shaped to form a storage article.
A35. The method of clause A33 further comprising the steps of:
   milling the fiber-containing layer;
   extruding the mineral-containing layer; and
   bonding the mineral-containing layer to the fiber-containing layer, by performing either:
      a hot application process comprising bonding the layers with an adhesive having a viscosity of from about 660 cP to about 1,480 cP at a temperature of from about 300°F to about 385°F;
      a cold application process comprising bonding the layers with an adhesive having a viscosity of from about 1,000 cP to about 2,100 cP at a temperature of from about 27.5°C to about 30°C;
         applying adhesive layers containing urethane;
         applying curable adhesives such as phenol-type, epoxy type, acrylic type;
         applying an adhesive combination of polyester polyol or acrylated polypol and a polyiscoyanate;or
         performing in-line extrusion-lamination, using said adhesives among others as above;
         whereby the composite structure is capable of being shaped to form a storage article.
A36. A method of shipping a product or displaying a product for retail, comprising the steps of:
   providing a storage article comprising a composite structure comprising:
      a fiber-containing layer comprising at least one natural fiber, the fiber-containing layer having a surface; and
      a mineral-containing layer covering the fiber-containing layer, the mineral-containing layer being directly bonded to the fiber-containing layer substantially continuously across the surface of the fiber-containing layer;
      wherein the fiber-containing layer and mineral-containing layer are shaped, sized and manufactured such that the composite structure formed therefrom is capable of being shaped to form the storage article;
   placing the product within the storage article; and
   shipping the storage article or displaying the storage article for retail.
A37. The method of clause A36 wherein the step of providing a storage article further comprises providing a composite structure that is formed into the shape of at least one of a retail box and shipping box.
A38. The method of clause A37 further comprising at least one of a retail or a shipping box, and shaping the composite structure to form the component for the storage article, wherein the mineral-containing layer and fiber-containing layer provided in steps machining the pliable composite structure by at least one of folding and creasing of the pliable composite structure into a shaped, sized, and manufactured such that the composite structure formed therefrom is capable of being shaped to form the storage article.
A39. The method of clause A36 wherein the step of providing a storage article comprises providing a prescribed amount of a bonding agent in the mineral-containing layer that is sufficient to allow for vacuum forming or thermoforming of the pliable composite.
A40. The method of clause A36, wherein the step of shipping the storage article or displaying the storage article comprises bonding the mineral-containing layer to the fiber-containing layer by:
   a hot application process comprising bonding the layers with an adhesive having a viscosity of from about 660 cP to about 1,480 cP at a temperature of from about 300° F to about 385° F; or
   a cold application process comprising bonding the layers with an adhesive having a viscosity of from about 1,000 cP to about 2, 100 cP at a temperature of from about 27.5° C to about 30° C;
   applying adhesive layers containing urethane;
   applying curable adhesives such as phenol-type, epoxy type, acrylic type;
   applying an adhesive combination of polyester polyol or acrylated polypol and a polyiscoyanate; and
   performing in-line production process employing in line extrusion-lamination and in-line blown film-lamination techniques using said adhesives, among others, above, thereby providing a composite structure.
A41. A composite structure, of at least two layers, not requiring a bonding film, the composite structure by weight containing less than 20% polymers, e.g. co-polymers, homo-polymers, monomers, or poly-lactic acid, and other acids and combinations thereof, and contains at least 5% natural mineral content, the composite structure comprising;
   a layer of non-impregnated rolled or sheeted, non-mineral, natural fibers in calipers between around 4 mil and 30 mil, *e.g.* pulp, cellulosic fiber, cotton, rice, cloth, bagasse, or paper fiber(s) applied, without requiring film stretching, to mineral containing layers; all layers are solid and have opposing flat surfaces that do not require calendaring wherein the fiber-containing layer has a basis weight of from about 20 to about 128 lbs/1000 sqft, and from about 195 to 420 g/m² and a thickness of from about 4 mils to about 30 mils, and a tensile strength of from about 125 to about 900 MD and about 55 to about 400 CD;
   a layer of unheated, non-metal or impregnated minerals with bonding agents wherein the mineral containing layer comprises a basis weight of about 15 to about 240 lbs/1000 sqft, and from about 40 to about 900 g/m², in the form of rolls and sheets that are unblended within the composite comprising at least 10% by weight of the entire composite structure, a density between 0.4 to 1.2 g/m3, calipers between 1.5 mil and 24.0 mil and contain organic minerals e.g. diatomaceous earth, ground calcium carbonate, mica, silica, glass, clays, zeolytes, slate, etc., and combinations thereof;
   wherein the mineral containing layer is substantially and continuously bonded, without requiring stretching, across the entire contact surface of the fiber containing layers, and the composite structure is substantially non-synthetic, non-blended, non-mixed, non-translucent, non-interspersed, non-flaked, non-matrixed, and is non-thermoplastic.
A42. The composite structure of clause A41 wherein a pliable composite structure containing a prescribed amount of a thermo-formable bonding agent in the mineral-containing layer(s) that is sufficient to form the storage article shape via thermo, pressure forming, or vacuum forming.
A43. The composite structure of clause A41 wherein the fiber composite structure has been treated to provide a substantial moisture resistance or moisture barrier.
A44. The composite structure of clause A41 where the mineral-containing and fiber-containing layers have bio-degradable content.
A45. The composite structure of clause A41 having compostable content.
A46. The composite structure of clause A41 having photo photo-degradable content.
A47. The composite structure of clause A41 having recycled and recyclable content.
A48. The composite structure of clause A41 wherein the fiber structure is poly coated.
A49. The composite structure of clause A41 wherein one or more surfaces are coated with water or solvent based heat seal coatings.
A50. The composite structure of clause A41 wherein one or more sides have applied embossed foil or metalized film stamping.
A51. The composite structure of clause A41 wherein one or more layers are corrugated.
A52. The composite structure of clause A41 wherein the fibers of the fiber-containing layer consist only of natural fiber material.
A53. The composite structure of clause A41 wherein the fibers of the fiber-containing layer comprise synthetic fibers.

## Claims

1. A composite structure (22) by weight containing less than 20% polymers and containing at least 5% natural mineral content, the composite structure comprising;
a fiber-containing layer (24) formed of non- impregnated rolled or sheeted natural fibers in calipers between 0.1 mm (4 mil) and 0.76 mm (30 mil), the layer being solid and having opposing flat contact surfaces that do not require calendaring, wherein the fiber-containing layer has a basis weight of from 98 -625 g/m² (20 to 128 lbs/1000 sq. ft.), and a thickness of from 0.1 mm (4 mils) to 0.76 mm (30 mils), and a tensile strength of from 125 to 900 MD and 55 to 400 CD; and
a mineral-containing layer (26) formed of unheated, non-metal, or impregnated minerals with a bonding agent to form a mineral composite, wherein the mineral- containing layer is in the form of rolls and sheets that are unblended within the mineral composite comprising at least 10% by weight of the entire composite structure, a density between 0.4 to 1.2 g/m³, calipers between 0.038·mm (1.5 mil) and 0.610 mm (24.0 mil) and contain organic minerals;
wherein the mineral-containing layer is substantially and continuously directly bonded, without requiring stretching, across the entire contact surface of the fiber-containing layer.

2. The composite structure of claim 1, wherein the mineral- containing layer comprises a basis weight of from 40 to 900 g/m², preferably 73 -117·10¹ g/m² (15 to 240 lbs/1000 ft²).

3. The composite structure of claim 1, wherein the mineral-containing layer comprises a mineral-layer bonding agent which is at least one of the group consisting of high density polyethylene, bio-polymers, and poly-lactic acids.

4. The composite structure of claim 1, wherein the mineral-containing layer comprises a mineral-layer bonding agent which is a poly-lactic acid.

5. The composite structure of claim 1, wherein pliability of the composite structure (22) is greater than that of the fiber containing layer (24) alone as determined by pliability standards or bendability, wherein bendability is determined according to ASTM D6125-97 (2002).

6. The composite structure of claim 1, wherein the fiber containing layer (24) comprises a fiberboard or a paperboard, preferably recycled folding boxboards (RFB), bleached Kraft board, unbleached Kraft board, as well as coated recycled boards (CRB) and uncoated recycled boards (URB), clay coated light black boards (CCLB) and triplex and duplex boards.

7. The composite structure of one of claims 1 to 6, wherein the mineral containing layer (26) is formed by coextrusion.

8. The composite structure of one of claims 1 to 7, wherein the heat seal is selected from the group consisting of a water-based heat seal and a solvent-based heat seal.

9. The composite structure of one of claims 1 to 8, wherein the pliability of the composite structure (22) is at least 20% greater than that of the fiber containing layer (24) used apart from the composite structure (22) as measured by ASTM D228-02, #10 or ASTM D6125-97 (2002) standards.

10. The composite structure of one of claims 1 to 9, wherein the mineral-containing layer has a thickness of from 0.038 mm to 0.762 mm.

11. The composite structure of one of claims 1 to 10, wherein the fiber-containing layer is a paperboard type recycled folding boxboard, bleached and unbleached Kraft board, coated and uncoated recycled board and folding box board and has a thickness of from 0.1 mm to 0.711 mm.

12. The composite structure of one of claims 1 to 10, wherein the fiber-containing layer is a paperboard type and has a thickness of from 0.31 mm to 0.58 mm.

13. The composite structure of one of claims 1 to 12, wherein the organic mineral is selected from the group consisting of diatomaceous earth, ground calcium carbonate, mica, silica, glass, clays, zeolytes, slate, and combinations thereof.

14. The composite structure of one of claims 1 to 13, wherein
(i) the fiber-containing layer contains a triplex or duplex board and has a basis weight of from 225 g/m² to 450 g/m², and/or
(ii) the fiber-containing layer has a basis weight of from 195 to 420 g/m², and/or
(iii) the mineral- containing layer comprises a basis weight of 73 -117·10¹ g/m² (15 to 240 lbs/1000 ft²).

15. Storage article formed from the composite structure of one of claims 1 to 14.
